# EUROPEAN PATENT SPECIFICATION

(11) **EP 2 641 363 B1**
(45) Date of publication and mention of the grant of the patent: **23.05.2018**
(21) Application number: 10782240.5
(22) Date of filing: 16.11.2010
(51) Int. Cl.: H04L 12/58, H04L 12/18

(54) **MESSAGE TARGETING PLATFORM**
ÜBERMITTLUNGSPLATTFORM FÜR GERICHTETE NACHRICHTEN
PLATE-FORME DE CIBLAGE DE MESSAGES

(43) Date of publication of application: 25.09.2013
(73) Proprietor: Telefonaktiebolaget LM Ericsson (publ), 164 83 Stockholm (SE)
(72) Inventor: JOHNSTON, Andrew, S-16480 Stockholm (SE)
(74) Representative: Brann AB
(86) International application number: PCT/EP2010/067570
(87) International publication number: WO 2012/065628

(56) References cited:
- WO-A1-2009/065045
- WO-A2-02/44834
- US-A1- 2002 087 688

## Description

### Technical field

The present application relates to a message targeting platform, a method of operating a message targeting platform, a wireless communications network, a method of operating a wireless communications network, a targeting interface, a method of operating a wireless communications system, and a computer-readable medium.

### Background

A new type of platform is emerging in the telecommunications industry that allows advertisers, their representative advertising/media agencies, publishers and mobile operators to collaborate in order to harness mobile networks to deliver targeted messages to interested users. These platforms have been developed with extensive feature sets. The present application is related to mechanisms for optimized delivery of targeted content to users using messaging services such as SMS or MMS. One example of such targeted messaging is referred to as targeted push advertising.

Push advertising via SMS & MMS technologies is the most common mode of digital advertising in the mobile space today. Push advertising may be categorized as comprising two distinct branches:
- Targeted Advertising: The user receives advertising messages based on mechanisms that match the users profile information (e.g. age/address/gender) against advertising campaign specifications in order to find "best fit" users for campaign messages.
- Untargeted Advertising: The advertising message is distributed to a random or segment rotated selection of users without any regard to any known user details.

Targeted advertising allows for the directing of well matched push advertising messages to users. Targeted advertising requires access to the following information:
- User Profile: Data specifying the user (e.g. age/city/gender) as well as flagging the users consent to receive push advertising.
- Campaign Specifications: Data that specifies what kinds of users an advertiser wishes to reach (e.g. age<25,city=newyork, gender=fem)
- Matching Mechanisms: Logic that finds best fit users for any given campaign by "matching" campaign specifications against user profile attributes using simple or sophisticated algorithms.
- User Network Identity: The means of addressing the user, i.e. their mobile number, their email address etc. which enables the system to send the message to the targeted user.

When targeted messaging platforms are deployed in operator infrastructure, the operator typically has access to all of the necessary information, and the network infrastructure, required to deliver the targeted push message to the appropriate users.

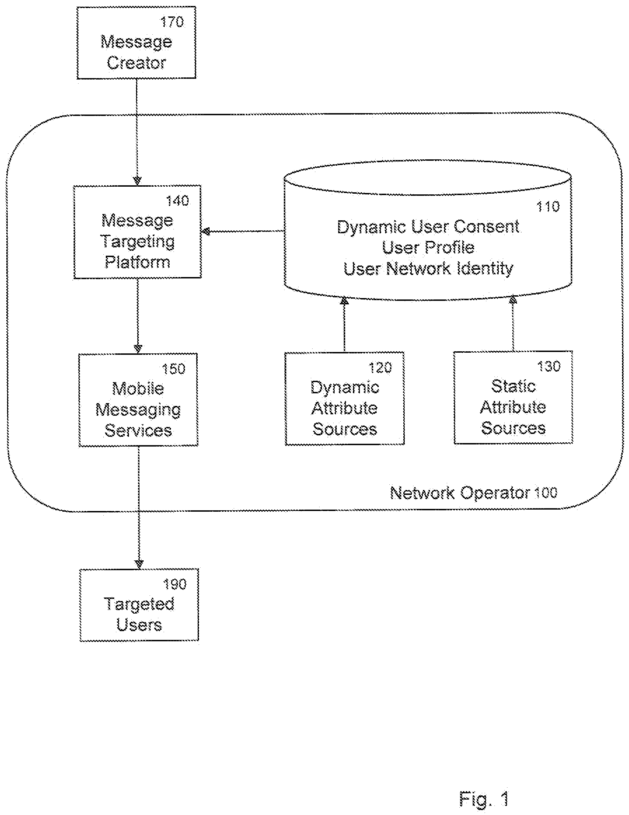

A simple operator based targeted message distribution system is shown in Figure 1. Network operator 100 operates a wireless communications network used by a plurality of users. A message creator 170 sends message content and targeted user specifications to the network operator 100. The network operator 100 comprises a user database 110 which is kept updated from both dynamic attribute sources 120 and static attribute sources 130. The user database 110 stores dynamic user consent, user profile, and user network identity. The message content and targeted user specifications are received by a message targeting platform 140 in the network operator 100. The message targeting platform 140 consults user database 110 and identifies targeted users that meet the targeted user specifications. The user network identities of the targeted users are retrieved from user database 110 by the message targeting platform 140 and sent to a mobile messaging service 150 within the network operator 100. The mobile messaging service 150 sends the message content in a message from the network operator 100 to the targeted users 190.

An emerging trend is that message targeting platforms are deployed and operated by specialist non-operator entities that are based outside the operator infrastructure. These platforms interconnect with operator infrastructure in order to handle the message targeting. An advantage of such a system is that one message targeting platform can interface with a plurality of networks. A message targeting platform located outside the network operator environment currently needs to have access to user profile, user consent, and user network identity information in order to perform targeted message distribution. One commonly practiced solution entails that the user database, or a part thereof, is periodically synchronized with a synchronized user database associated with the message targeting platform. The message targeting platform can then use the synchronized user database information to deliver targeted messages.

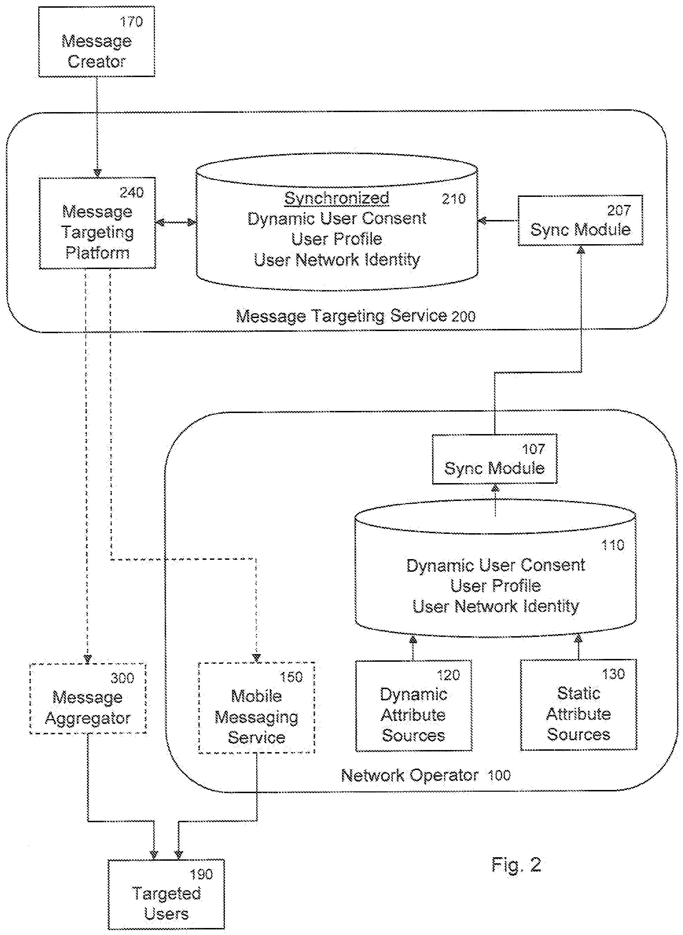

A system incorporating a third party message targeting service 200 is illustrated in Figure 2. The network operator 100 comprises a user database 110 which is kept updated from both dynamic attribute sources 120 and static attribute sources 130. The user database 110 stores dynamic user consent, user profile, and user network identity. A message targeting service 200 comprises a message targeting platform 240 and a synchronized user database 210. Synchronized user database 210 is periodically updated with any changes made to the user database 110 by sync modules 107 and 207 in the network operator 100 and message targeting service 200 respectively.

A message creator 170 sends message content and targeted user specifications to the message targeting service 200. The message content and targeted user specifications are received by a message targeting platform 240 in the message targeting service 200. The message targeting platform 240 consults synchronized user database 210 and identifies targeted users that meet the targeted user specifications. The user network identities of the targeted users are retrieved from database 210 by the message targeting platform 240. The message targeting platform 240 can send the message content to targeted users 190 either via a mobile messaging service 150 within the network operator 100 or via a separate message aggregator 300. US 2002/0087688 A1 discloses a scalable messaging system for data transmission between the network devices, such as set top boxes, and a central system server, such as a server which maintains a database of event logs for the network. There are a number of problems with using such a synchronized database arrangement:
- As a replication based approach; the solution will suffer from some classical synchronization maladies such as "information lag" or "inconsistency windows".
- New attributes cannot be introduced quickly by the network operator 100 because of the time taken for changes made on the operator user database 100 to filter down to the synchronized user database 210.

Accordingly, the present application provides an improved message targeting platform.

### Summary

There is provided a method of operating a message targeting platform according to claim 1. There is also provided a method of operating a wireless communications network according to claim 3. There is also provided a method of operating a wireless communications system, the wireless communications system comprising a message targeting platform and at least one wireless communications network operator, the method comprising identifying a message for distribution, and identifying at least one target user category relating to the message. The method further comprises sending a request for details of targeted users matching the at least one target user category to at least one wireless communications network operator. The method further comprises receiving details of at least one targeted user, and instructing the message to be sent to the at least one targeted user using the received details.

There is also provided a message targeting platform according to claim 7. There is also provided a wireless communications network according to claim 9. There is also provided a computer-readable medium, carrying instructions, which, when executed by computer logic, causes said computer logic to carry out all the steps of any of the methods defined herein.

The systems and methods disclosed herein provide an improved message targeting arrangement which overcomes the synchronization problems outlined further above.

### Brief description of the drawings

A message targeting platform will now be described, by way of example only, with reference to the accompanying drawings, in which:
Figure 1 shows a network operator based targeted message distribution system;
Figure 2 shows a system incorporating a third party message targeting service;
Figure 3 shows an improved message targeting system as disclosed herein;
Figure 4 shows an interaction sequence according to the method disclosed herein;
Figure 5 shows a method of operating a message targeting platform; and
Figure 6 shows a method of operating a targeting interface.

### Detailed description

The present application provides an improved message targeting platform. The method and apparatus disclosed herein enables message targeting platforms and network operators to collaboratively target messages to appropriate users.

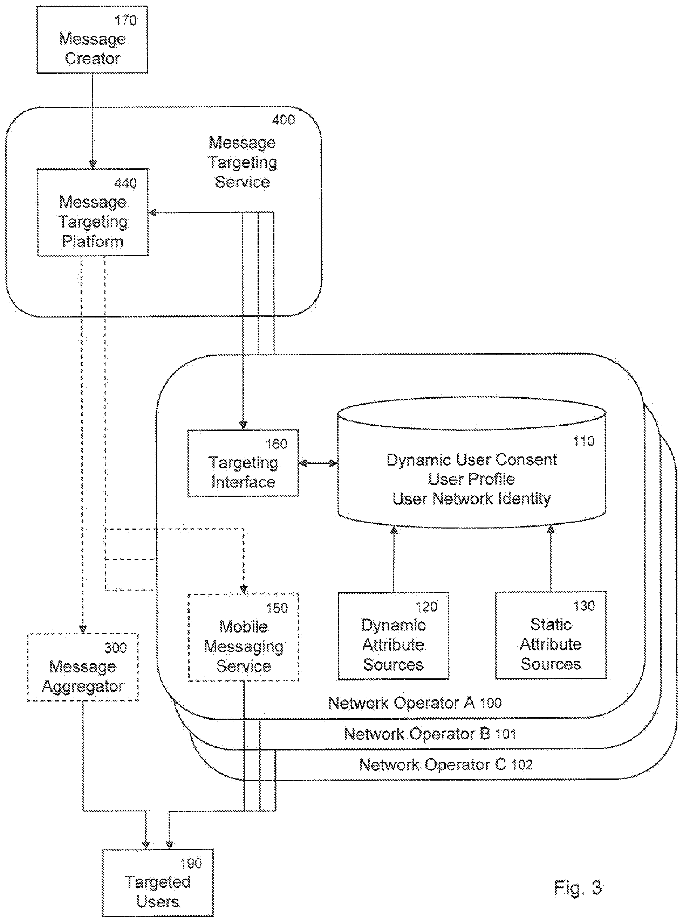

Figure 3 shows an improved message targeting system as disclosed herein. A message creator 170 sends message content and targeted user specifications to a message targeting service 400. The message content and targeted user specifications are received by a message targeting platform 440 in the message targeting service 400. The message targeting platform 440 sends a request for details of users matching the targeted user specifications to at least one of a plurality of wireless communications network operators: Network Operator A 100, Network Operator B 101, Network Operator C 102.

Network operator A 100 comprises a targeting interface 160, which receives the request from the message targeting platform 440. Network operator A 100 further comprises a user database 110, dynamic attribute sources 120, static attribute sources 130 and a mobile messaging service 150; these operate as described above in connection with figure 1. In figure 3, the message targeting platform 440 is shown sending a request to network operator A 100, network operator B 101, and network operator C 102. Only the details of network operator A 100 are shown in figure 3, elements corresponding to those in network operator A 100 are also present in both network operator B 101 and network operator C 102.

The targeting interface 160 in network operator A 100 receives the request for details of users matching the targeted user specifications, and consults user database 110 to identify targeted users 190 that meet the targeted user specifications. The targeting interface 160 may operate using a set of web-service interactions that enables the message targeting platform 440 to retrieve information from the user database 110. The message targeting platform 440 uses the retrieved information to deliver the message content to targeted users 190.

As mentioned with reference to figure 2, targeted messages may be sent either via a mobile messaging service 150 within the network operator 100 or via a separate message aggregator 300. If messages are to be sent by a messaging service 150 within the network operator 100, then only the user network identities of the targeted users are retrieved from database 110 by the message targeting platform 440. Only a user network identity is needed by the message targeting platform 440 because the mobile messaging service 150 will be able to retrieve the targeted user contact details from the network database in order to deliver the targeted messages.

The operation of the system of figure 3 will now be described with reference to a worked example.
- A fashion retail chain engages the services of an advertising agency to run mobile device advertising campaigns for it. The agency registers with the message targeting service 400, which can operate with network operators 100, 101, 102 in the same geographical region of operation as the fashion retail chain.
- The advertising agency logs on to the message targeting service 400 and creates a push advertising campaign, providing the targeted user categories to specify the user types it wishes to address, in this case age<30, city=Stockholm, gender=female. The advertiser also supplies multimedia messaging service (MMS) content containing a 2D barcode discount voucher redeemable on a Saturday at the fashion retail chain's stores. The agency specifies the campaign should run on the Friday afternoon immediately preceding the Saturday for which the voucher is valid.
- The message targeting service 400 executes the campaign on the Friday afternoon according to schedule. The message targeting platform 440 does not have user profiles itself but instead sends a request to the targeting interface 160 in each of its 3 connected network operators A 100, B 101, C 102.
- Each targeting interface 160 exposes a web-service from the respective operator network, this enables any Message Targeting Platform to supply: a transaction id, the desired number of users, the targeted user categories and further qualifiers towards the Network Operator.
- The network operator's web-service handler code, within the respective Operators Targeting Interface 160 resolves to operator side matching logic which searches the operators opted-in subscriber database in an appropriate manner, to find users matching the target users categories using the network operator's own algorithms. A list of targeted users is assembled, the details for which are then returned to the message targeting platform 440.
- The network operator's matching algorithm can include simple matching, usage of dynamic attributes such as location & presence, random selection or any combination that the network operator has tuned to deliver the best targeting performance.
- The mobile advertising platform uses the returned list of targeted user details to send the message content in messages to the targeted users 190 using either the network operator's mobile messaging service 150 or using a message aggregator 300

Accordingly, the distributed process disclosed herein allows a message targeting service and a network operator collaborate in the targeting of messages. This allows distribution of computational processes and data for greater efficiency. This process can be used, to great advantage, replacing synchronization based methods as, for example, shown in Figure 2. For example, the described process enables a message targeting service to direct targeted messages to users without having access to the user's profile data. This means that the disclosed system and method provides a solution that protects the interests of the user and the operator while satisfying an advertiser's need for advanced and efficient message targeting.

The system and method disclosed herein allows for the distribution of computing load between the message targeting service and the operator's network.

This system allows the network operator's to extend their targeting capabilities and to adapt their targeting algorithms in whatever fashion they want and to do this in a way that is invisible to the message targeting service. Thus, the network operator may innovate independently of the advertising platform owner.

The network operator receives the targeted user categories from the message targeting service and thus the network operator is afforded visibility of the targeting specifications used, which in turn allows the operator to analyze targeting parameters and optimize their targeting mechanisms.

Further, the described system and method allows each network operator to flexibly and privately manage the details of its own user database and to manage it's users' preferences such as advertising opt-in as well as incentive programs without relying on a message targeting service for these aims.

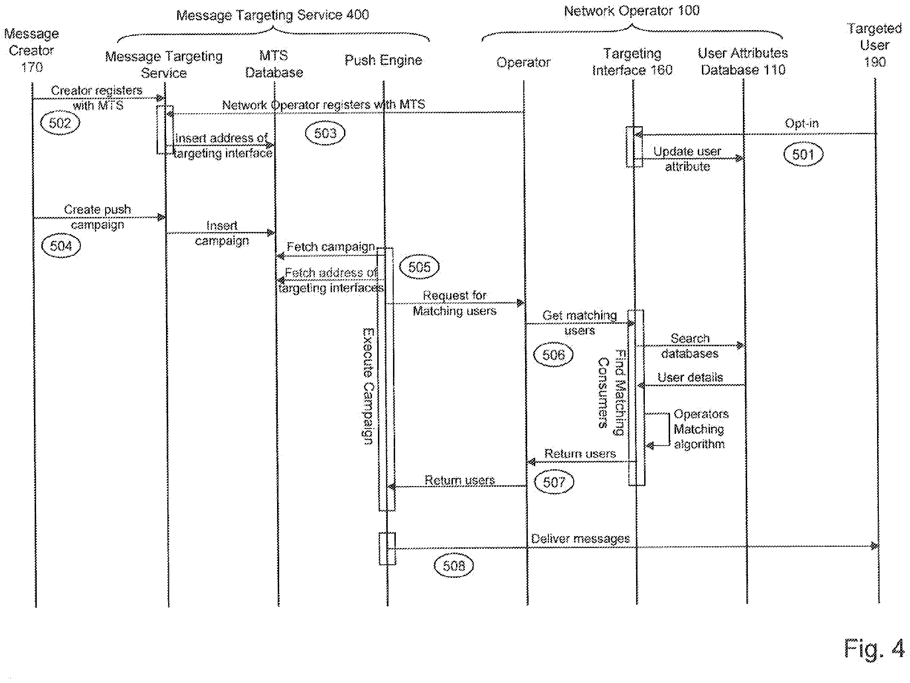

Figure 4 shows an interaction sequence according to the method disclosed herein.

At 501 a user acknowledges their willingness to participate in push mobile advertising by confirming this to their network operator 100, an action referred to as "opt-in". The network operator updates the user's attributes by flagging the user as "opted-in" in the user database 110. At 502 a message creator 170 registers with the message targeting service 400. At 503 a network operator 100 registers with the message targeting service 400. As part of the registration process the network operator 100 provides the public URL for their targeting interface 160; this identifies the web-service that will be later called by the message targeting platform 440 in order to find targeted users.

At 504 a message creator 170 creates a new push message mobile advertising campaign, including message content, a schedule and targeting specification. The message creator 170 submits the message campaign to the message targeting service 400.

At 505 the message targeting service 400 executes the messaging campaign as scheduled. A message targeting service push engine fetches the message campaign information, and fetches the URLs of the network operators' targeting interfaces. The message targeting service push engine sends a request to each of the targeting interfaces and invokes the web-service at each network operator (100, 101, 102). The request comprises: a transaction id for this invocation, and the targeted user categories for the messaging campaign.

At 506 the network operator 100 processes the request from the message targeting platform by initiating its own matching algorithm which, while proprietary to the operator, includes the following generic steps:
a. Process the targeted user categories received from the message targeting platform 440's invocation of the Targeting Interface.
b. Query local user database(s) 110 for static & dynamic user attributes to find opted-in users matching the target categories;
c. Assemble a list of user details (contact details or network identities) to be returned in a response to the message targeting platform 440; and
d. Create a response including the transaction id, targeted user counts, and targeted user details (such as user identity).
At 507 the network operator 100 sends a response including the transaction ID, targeted user counts, and targeted user details (which include the user network identity or network operator 100 alias for the user) to the message targeting service 400.

At 508 the message targeting service 400 processes the message content to generate a message for sending to each identified targeted user 190, and sends the message to the identified targeted users 190

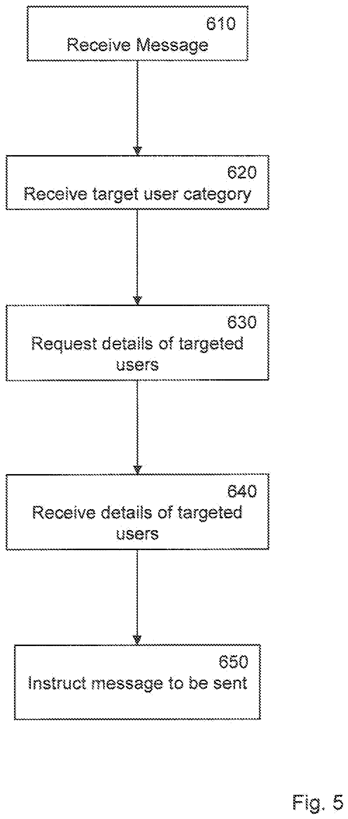

A method of operating the message targeting platform 440 is shown in figure 5. The message targeting platform 440 receives 610 a message for distribution, and it receives 620 at least one target user category associated with the message, and defining a group of at least one targeted users 190. The message targeting platform 440 sends 630 a request for details of targeted users 190 matching the at least one target user category to at least one network operator. In reply, the message targeting platform 440 receives 640 details of at least one targeted user 190, and uses these details to instruct 650 the message to be sent to the at least one targeted user 190.

A targeting interface 160 is based in each network operator 100, 101, 102 that is registered with the message targeting service 400. The targeting interface 160 provides a web service which is accessible by the message targeting service 400. The web service is a standard interoperable SOAP based web service having at least one operation: "GetUsers(input)". Annexes A, B and C give exemplary specifications for "GetUsers Call (command payload)", "GetUsers Call (response payload)", and "CampaignTargetSpecification" respectively. It should be noted that these specifications are by way of example only and may be modified to suit particular implementations.

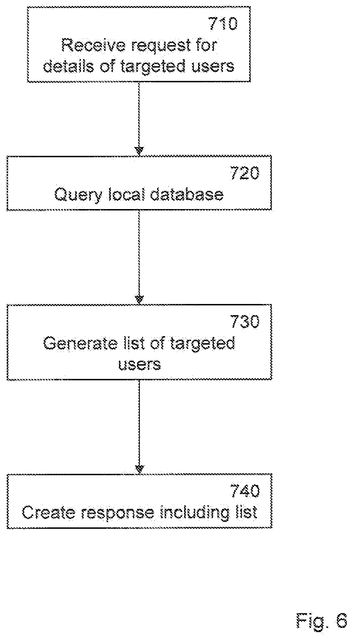

A method of operation of the targeting interface 160 is shown in Figure 6. The targeting interface 160 is in a wireless communications network 100 together with a user database 110. The targeting interface 160 receives 710, from a message targeting platform 440 external to the wireless communications network 100, a request for details of targeted users 190 matching with at least one target user category. The targeting interface 160 queries 720 the user database 110 for user attributes to find targeted users 190 matching the specified target user category. The targeting interface 160 generates 730 a list of details of targeted users 190, and then creates 740 a response to the received request, the response including the generated list.

There are a number of additional problems with using a synchronized database arrangement as illustrated in Figure 2 that are not discussed above but included here by way of further information:
- The Network Operator 100 is often reluctant to have user data synchronized to an external party's system (such as Message Targeting Service 200), as the operator considers this data to be a unique & commercially valuable information asset.
- The operator may be subject to regulatory or contractual obligations governing/limiting ability to synchronize user data to third parties.
- Synchronization approaches are typically limited to static or low-volatility attributes, whereas dynamic "contextual" user attributes are considered to have considerable value in targeting advertising.
- The operator does not have the freedom to innovate own targeting algorithms that might improve their competitiveness in the advertising market or improve their subscribers' advertising value perception (as targeting is only carried out in the Message Targeting Platform)
- The operator has a web of dependency with the third party advertising platform that limits the pace at which the operator can introduce new attributes.

It will be apparent to the skilled person that the exact order and content of the actions carried out in the method described herein may be altered according to the requirements of a particular set of execution parameters. Accordingly, the order in which actions are described and/or claimed is not to be construed as a strict limitation on the order in which actions are to be performed.

This document refers to target user categories of various types. It should be noted that in the context of this document these categories may comprise specific demographic groups or demographic classes defining, merely by way of example, a user's: age; sex; address; subscription package; income; social network characteristics; spoken languages; number of children; marital status; biometric data; health data; insurance history; travel history; interests; hobbies; profession; web browsing history; phone call patterns; messaging pattern; number of contacts; education; sports habits; terminal/device information; location; or transportation method. This list of examples is not exclusive.

### Annex A

**GetUsers Call (command payload)**

| **Parameter** | **Data type** | **Note(s)** |
|---|---|---|
| transactionID | string | This client generated, ad platform wide unique, handle will be passed back to the caller in the getConsumers response in order to allow request/response correlation |
| networkIdVariant | enum | This parameter indicates what type of network id the caller would like to have returned. |
| | { | |
| | teluri, | |
| | inetmail, | |
| | SIPuri | In addition to standardized network identities, a brokerAlias may be supported for each of the ad platform supported brokers e.g. 'EriIpxbrokerAlias', 'Air2WebbrokerAlias', etc. |
| | [Tag]brokerAlias | |
| | } | |
| | | |
| | | The default is teluri. |
| bucketSize | integer | This parameter indicates how many consumers the caller would ideally like to have returned. Servers will typically return <= *bucketSize* consumers on each invocation |
| | | |
| | | The default is 50 |
| returnAttributes | boolean | This parameter indicates if the client would like to have the consumer attributes returned along with the network identities. Typically, the server will not want to return the attributes, however in special partnerships this may be acceptable/ desirable. Server code is free to ignore this parameter if so desired. |
| | | |
| | | The default is FALSE. |
| latencyHint | enum | This parameter expresses a clients needs on latency budgets, the server may use the hint to decide what level of targeting to execute as well as how many consumers to return in order to fulfill the expressed latency hint depending on its own local conditions. |
| | { | |
| | low, | |
| | mid, | |
| | high | |
| | } | |
| | | |
| | | 'low' indicates please respond in <100 ms |
| | | 'mid' indicates please respond in <500 ms |
| | | 'high' indicates please respond in <1000 ms |
| | | |
| | | The default is "high" |
| matchingHint | enum | This parameter indicates the clients requirements on the qualification of matching consumers |
| | { | |
| | exact, | |
| | any, | |
| | fuzzy | 'exact' requires all parameters match |
| | } | 'any' requires a match on any one parameter |
| | | 'fuzzy' [to be clarified in a later version] |
| | | |
| | | The default is "exact" |
| campaignTargets | CampaignTargetSpec | This parameter provides the campaign targets that are to be matched against (see CampaignTargetSpec data type below) |

### Annex B

**GetUsers Call (response payload)**

| **Parameter** | **Data type** | **Note(s)** |
|---|---|---|
| transactionID | String | See definition in "GetUsers Call (command payload)" |
| netIdVariant | enum | See definition in "GetUsers Call (command payload)" |
| | { | |
| | teluri, | |
| | inetmail, | |
| | SIPuri | |
| | [Tag]brokerAlias | |
| | } | |
| consumerBucket | netIdVariant[M] | A list of consumers identified by the indicated netIdVariant, example is a 'list of msisdn' |
| | | |
| | | Optionally if returnAttributes is TRUE then consumer profile attributes may be returned by the server |

### Annex C

**CampaignTargetSpecification**

| **Campaign Targeting Parameter** | **Data type** | **Note(s)** |
|---|---|---|
| consGenderTarget | enum | The targeted gender of the consumer |
| | { | |
| | female, | |
| | male, | |
| | unknown | |
| | } | default = unknown |
| consInAgeGroupTarget | enum | The targeted age group of |
| | { | the oonsumer |
| | child (<10) | |
| | pre-teen(10-12) | |
| | teenager (13-19) | |
| | young-adult (20-22) | |
| | adult (22-38) | |
| | middle-age (38-65) | |
| | senior-citizen(>65) | |
| | unknown | default = unknown |
| | } | |
| consHasIncomeLevelTarget | enum | The targeted income level of the consumer |
| | { | |
| | //to-be-done | |
| | unknown | |
| | } | |
| | | default = unknown |
| consIsNationalOfTarget | String | The targeted nationality of the consumer, encoding in accordance with ISO-N |
| | | |
| | | default = unknown |
| consHasPrimaryLanguageTarget | string | The targeted primary language of the consumer, encoding in accordance with ISO-N |
| | | |
| | | default = unknown |
| consHasPrimaryChannelTarget | enum | The preferred push channel by which the consumer wishes to receive push advertising, if any. |
| | { | |
| | SMS, | |
| | MMS, | |
| | mobile-email, | |
| | msn-im-id, | |
| | yahoo-im-id, | |
| | google-im-id, | |
| | jabber-im-id, | |
| | facebook-id | |
| | unknown | |
| | } | |
| | | Default = SMS |
| consInterestedInTarget | string interests[N] | The list of interest areas targeted by this campaign |
| | | |
| | | default = all |
| consResidentInCountryTarget | string countries[N] | The list of countries targeted by the campaign |
| | | |
| | | default = unknown |
| consResidentInZipCodeTarget | string zipCodes[N] | The list of zip codes targeted by the campaign default = unknown |
| consResidentInCityTarget | string city[N] | The list of cities targeted by the campaign default = unknown |
| consOwnsDeviceBrandTarget | String | The device brand targeted by the campaign default = unknown |
| consOwnsDeviceModelTarget | String | The device model targeted by the campaign default = unknown |
| consInLocationZoneTarget | locationZone[N] | The locations targeted by the campaign. Each location is represented by an long/lat and radius(m) |
| consHasNetworkTarget | enum | The consumer connected network type targeted by the campaign |
| | { | |
| | mnb gsmgprsedge, | |
| | mbb_wcdma, | |
| | mbb_hspa, | |
| | mbb_wlan, | |
| | any | |
| | { | |
| | | default = any |
| consHasPresenceTarget | enum | The consumer presence state |
| | { | targeted by the campaign |
| | online | |
| | offline | |
| | any | default = any |
| | } | |
| consHasServiceListTarget | String Services[N] | The consumer service list targeted by the campaign |
| | srv-packetswitch | |
| | srv-portalsubscription | |
| | srv-mms | |
| | srv-tv | |
| | srv-music | |
| | srv-rbt | |
| | srv-voicemail | default = unknown |
| | srv-[anyuniquetag] | |
| | unknown | |
| consAccountTypeTarget | enum | The mobile subscriber targeted by the campaign |
| | { | |
| | prepaid, | |
| | postpaid, | |
| | any | |
| | { | default = any |

| Extensibility | | |
|---|---|---|
| cons [ANYTAG] Target | | Extension to any targeting specification and type beyond |

## Claims

1. A method of operating a message targeting platform (140), the method comprising:
identifying a message for distribution;
identifying at least one target user category relating to the message;
sending from the message targeting platform (140) a request for details of targeted users (190) matching the at least one target user category to at least one targeting interface in a wireless communications network operator (100); receiving details of at least one targeted user (190) generated after querying a local user database (110) for user attributes to find targeted users (190) matching the at least one target user category; instructing the message to be sent to the at least one targeted user (190) using the received details without having access to the targeted users' profile data.

2. The method of claim 1, wherein the request is sent to a plurality of wireless communications network operators (100).

3. A method of operating a wireless communications network comprising a targeting interface, the method comprising:
receiving a request from a message targeting platform (140) at the targeting interface for details of targeted users (190) matching at least one target user category relating to a message to be sent by the message targeting platform (140) to at least one targeted user (190) without having access to the targeted users' profile data;
querying a local user database (110) for user attributes to find targeted users matching the at least one target user category;
generating a list of details of targeted users (190); and creating a response to the received request, the response including the generated list.

4. The method of claim 3, further comprising:
receiving an instruction to send the message to the targeted users (190); and
sending the message to the targeted users (190).

5. The method of claim 4, wherein the request is sent to a plurality of wireless communications network operators (100).

6. The method of any preceding claim, wherein the details of the targeted user comprise at least one of:
targeted user details; and
targeted user network identities.

7. A message targeting platform (140) arranged to:
identify a message for distribution;
identify at least one target user category relating to the message;
send a request for details of targeted users (190) matching the at least one target user category to at least one targeting interface in a wireless communications network operator;
receive details of at least one targeted user (190) generated after querying a local user database (110) for user attributes to find targeted users matching the at least one target user category; and
instruct the message to be sent to the at least one targeted user (190) using the received details without having access to the targeted users' profile data.

8. The message distribution platform of claim 7, wherein the request is sent to a plurality of wireless communications network operators (100).

9. A wireless communications network (100), the wireless communications network comprising a targeting interface, the targeting interface arranged to:
receive a request from a message targeting platform (140) for details of targeted users (190) matching at least one target user category relating to a message to be sent by the message targeting platform (140) to at least one targeted user (190) without having access to the targeted users' profile data;
query a local user database (110) for user attributes to find targeted users (190) matching the at least one target user category;
generate a list of details of targeted users (190); and create a response to the received request, the response including the generated list.

10. The wireless communications network of claim 9, wherein the targeting interface is further arranged to:
receive an instruction to send the message to the targeted users (190); and
send the message to the targeted users (190).

11. A computer-readable medium, carrying instructions, which, when executed by computer logic, causes said computer logic to carry out all of the steps of any of the methods defined by claims 1 to 6.

## Patentansprüche

1. Verfahren zum Betreiben einer Übermittlungsplattform für gerichtete Nachrichten (140), wobei das Verfahren Folgendes umfasst:
Identifizieren einer Nachricht zur Verteilung;
Identifizieren von zumindest einer Zielbenutzerkategorie in Bezug auf die Nachricht;
Senden, von der Übermittlungsplattform für gerichtete Nachrichten (140), einer Anfrage nach Details von anvisierten Benutzern (190), die zu der zumindest einen Zielbenutzerkategorie passen, an zumindest eine gerichtete Schnittstelle in einem drahtlosen Kommunikationsnetzbetreiber (100) ;
Empfangen von Details von zumindest einem anvisierten Benutzer (190), die generiert werden, nachdem eine lokale Benutzerdatenbank (110) nach Benutzerattributen abgefragt wird, um anvisierte Benutzer (190) zu finden, die zu der zumindest einen Zielbenutzerkategorie passen;
Anweisen des Sendens der Nachricht an den zumindest einen anvisierten Benutzer (190) unter Verwendung der empfangenen Details, ohne Zugang zu den Profildaten des anvisierten Benutzers zu haben.

2. Verfahren nach Anspruch 1, wobei die Anfrage an eine Vielzahl von drahtlosen Kommunikationsnetzbetreibern (100) gesendet wird.

3. Verfahren zum Betreiben eines drahtlosen Kommunikationsnetzes, umfassend eine gerichtete Schnittstelle, wobei das Verfahren Folgendes umfasst:
Empfangen einer Anfrage nach Details von anvisierten Benutzern (190), die zu zumindest einer Zielbenutzerkategorie passen, von einer Übermittlungsplattform für gerichtete Nachrichten (140) an der gerichteten Schnittstelle, in Bezug auf eine von der Übermittlungsplattform für gerichtete Nachrichten (140) zu sendende Nachricht an zumindest einen anvisierten Benutzer (190), ohne Zugang zu den Profildaten des anvisierten Benutzers zu haben;
Abfragen einer lokalen Benutzerdatenbank (110) nach Benutzerattributen, um anvisierte Benutzer zu finden, die zu der zumindest einen Zielbenutzerkategorie passen;
Generieren einer Liste an Details von anvisierten Benutzern (190); und
Erstellen einer Antwort auf die empfangene Anfrage, wobei die Antwort die generierte Liste beinhaltet.

4. Verfahren nach Anspruch 3, ferner umfassend:
Empfangen einer Anweisung zum Senden der Nachricht an die anvisierten Benutzer (190); und
Senden der Nachricht an die anvisierten Benutzer (190).

5. Verfahren nach Anspruch 4, wobei die Anfrage an eine Vielzahl von drahtlosen Kommunikationsnetzbetreibern (100) gesendet wird.

6. Verfahren nach einem vorhergehenden Anspruch, wobei die Details des anvisierten Benutzers zumindest eines des Folgenden umfassen:
Details des anvisierten Benutzers; und
Netzidentitäten des anvisierten Benutzers.

7. Übermittlungsplattform für gerichtete Nachrichten (140), die für Folgendes angeordnet ist:
Identifizieren einer Nachricht zur Verteilung;
Identifizieren von zumindest einer Zielbenutzerkategorie in Bezug auf die Nachricht;
Senden einer Anfrage nach Details von anvisierten Benutzern (190), die zu der zumindest einen Zielbenutzerkategorie passen, an zumindest eine gerichtete Schnittstelle in einem drahtlosen Kommunikationsnetzbetreiber;
Empfangen von Details von zumindest einem anvisierten Benutzer (190), die generiert werden, nachdem eine lokale Benutzerdatenbank (110) nach Benutzerattributen abgefragt wird, um anvisierte Benutzer zu finden, die zu der zumindest einen Zielbenutzerkategorie passen; und
Anweisen des Sendens der Nachricht an den zumindest einen anvisierten Benutzer (190) unter Verwendung der empfangenen Details, ohne Zugang zu den Profildaten des anvisierten Benutzers zu haben.

8. Übermittlungsplattform für gerichtete Nachrichten nach Anspruch 7, wobei die Anfrage an eine Vielzahl von drahtlosen Kommunikationsnetzbetreibern (100) gesendet wird.

9. Drahtloses Kommunikationsnetz (100), wobei das drahtlose Kommunikationsnetz eine gerichtete Schnittstelle umfasst, wobei die gerichtete Schnittstelle für Folgendes angeordnet ist:
Empfangen einer Anfrage nach Details von anvisierten Benutzern (190), die zu zumindest einer Zielbenutzerkategorie passen, von einer Übermittlungsplattform für gerichtete Nachrichten (140), in Bezug auf eine von der Übermittlungsplattform für gerichtete Nachrichten (140) zu sendende Nachricht an zumindest einen anvisierten Benutzer (190), ohne Zugang zu den Profildaten des anvisierten Benutzers zu haben;
Abfragen einer lokalen Benutzerdatenbank (110) nach Benutzerattributen, um anvisierte Benutzer (190) zu finden, die zu der zumindest einen Zielbenutzerkategorie passen;
Generieren einer Liste an Details von anvisierten Benutzern (190); und
Erstellen einer Antwort auf die empfangene Anfrage, wobei die Antwort die generierte Liste beinhaltet.

10. Drahtloses Kommunikationsnetz nach Anspruch 9, wobei die gerichtete Schnittstelle ferner für Folgendes angeordnet ist:
Empfangen einer Anweisung zum Senden der Nachricht an die anvisierten Benutzer (190); und
Senden der Nachricht an die anvisierten Benutzer (190).

11. Computerlesbares Medium, Anweisungen enthaltend, die, wenn sie durch Computerlogik ausgeführt werden, bewirken, dass die Computerlogik alle der Schritte nach einem der Verfahren, die durch Anspruch 1 bis 6 definiert werden, durchführt.

## Revendications

1. Procédé d'exploitation d'une plateforme de ciblage de message (140), le procédé comprenant :
l'identification d'un message à distribuer ;
l'identification d'au moins une catégorie d'utilisateur cible relative au message ;
l'envoi à partir de la plateforme de ciblage de message (140) d'une demande de détails d'utilisateurs ciblés (190) correspondant à l'au moins une catégorie d'utilisateur cible à au moins une interface de ciblage dans un opérateur de réseau de communication sans fil (100) ;
la réception de détails d'au moins un utilisateur ciblé (190) générés après avoir interrogé une base de données d'utilisateur locale (110) concernant des attributs d'utilisateur afin de trouver des utilisateurs ciblés (190) correspondant à l'au moins une catégorie d'utilisateur cible ;
le fait d'ordonner que le message soit envoyé à l'au moins un utilisateur ciblé (190) en utilisant les détails reçus sans avoir accès aux données de profil des utilisateurs ciblés.

2. Procédé selon la revendication 1, dans lequel la demande est envoyée à une pluralité d'opérateurs de réseau de communication sans fil (100).

3. Procédé d'exploitation d'un réseau de communication sans fil comprenant une interface de ciblage, le procédé comprenant :
la réception d'une demande à partir d'une plateforme de ciblage de message (140) au niveau de l'interface de ciblage concernant des détails d'utilisateurs ciblés (190) correspondant à au moins une catégorie d'utilisateur cible relative à un message à envoyer par la plateforme de ciblage de message (140) à au moins un utilisateur ciblé (190) sans avoir accès aux données de profil des utilisateurs ciblés ;
l'interrogation d'une base de données d'utilisateur locale (110) concernant des attributs d'utilisateur afin de trouver des utilisateurs ciblés correspondant à l'au moins une catégorie d'utilisateur cible ;
la génération d'une liste de détails d'utilisateurs ciblés (190) ; et
la création d'une réponse à la demande reçue, la réponse comprenant la liste générée.

4. Procédé selon la revendication 3, comprenant en outre :
la réception de l'instruction d'envoyer le message aux utilisateurs ciblés (190) ; et
l'envoi du message aux utilisateurs ciblés (190).

5. Procédé selon la revendication 4, dans lequel la demande est envoyée à une pluralité d'opérateurs de réseau de communication sans fil (100).

6. Procédé selon une quelconque revendication précédente, dans lequel les détails de l'utilisateur ciblé comprennent au moins l'un parmi :
les détails des utilisateurs ciblés ; et
les identités de réseau des utilisateurs ciblés.

7. Plateforme de ciblage de message (140) agencée pour :
identifier un message à distribuer ;
identifier au moins une catégorie d'utilisateur cible relative au message ;
envoyer une demande de détails d'utilisateurs ciblés (190) correspondant à l'au moins une catégorie d'utilisateur cible à au moins une interface de ciblage dans un opérateur de réseau de communication sans fil ;
recevoir des détails d'au moins un utilisateur ciblé (190) générés après avoir interrogé une base de données d'utilisateur locale (110) concernant des attributs d'utilisateur afin de trouver des utilisateurs ciblés correspondant à l'au moins une catégorie d'utilisateur cible ; et
ordonner que le message soit envoyé à l'au moins un utilisateur ciblé (190) en utilisant les détails reçus sans avoir accès aux données de profil des utilisateurs ciblés.

8. Plateforme de distribution de message selon la revendication 7, dans laquelle la demande est envoyée à une pluralité d'opérateurs de réseau de communication sans fil (100).

9. Réseau de communication sans fil (100),
le réseau de communication sans fil comprenant une interface de ciblage, l'interface de ciblage étant agencée pour :
recevoir une demande d'une plateforme de ciblage de message (140) concernant des détails d'utilisateurs ciblés (190) correspondant à au moins une catégorie d'utilisateur cible relative à un message à envoyer par la plateforme de ciblage de message (140) à au moins un utilisateur ciblé (190) sans avoir accès aux données de profil des utilisateurs ciblés ;
interroger une base de données d'utilisateur locale (110) concernant des attributs d'utilisateur afin de trouver des utilisateurs ciblés (190) correspondant à l'au moins une catégorie d'utilisateur cible ;
générer une liste de détails d'utilisateurs ciblés (190) ; et
créer une réponse à la demande reçue, la réponse comprenant la liste générée.

10. Réseau de communication sans fil selon la revendication 9, dans lequel l'interface de ciblage est en outre agencée pour :
recevoir l'instruction d'envoyer le message aux utilisateurs ciblés (190) : et
envoyer le message aux utilisateurs ciblés (190).

11. Support lisible par ordinateur, transportant des instructions qui, lorsqu'elles sont exécutées par une logique informatique, amènent ladite logique informatique à réaliser toutes les étapes selon l'un quelconque des procédés des revendications 1 à 6.
